Europäisches Patentamt

European Patent Office

Office européen des brevets

(11) Veröffentlichungsnummer: **0 358 597**
A2

(12) **EUROPÄISCHE PATENTANMELDUNG**

(21) Anmeldenummer: 89730170.1

(22) Anmeldetag: 25.07.89

(51) Int. Cl.5: **H 04 Q 11/04**
H 04 M 11/06

(30) Priorität: 07.09.88 DE 3830879

(43) Veröffentlichungstag der Anmeldung:
14.03.90 Patentblatt 90/11

(84) Benannte Vertragsstaaten:
AT CH DE ES FR GB IT LI

(71) Anmelder: **ELMEG GmbH Kommunikationstechnik**
**Vöhrumer Strasse 30**
**D-3150 Peine (DE)**

(72) Erfinder: **Sommer, Kurt, Dipl.-Ing,**
**Amselsteg 2**
**D-3202 Bad Salzdetfurth (DE)**

**Perlich, Wolfgang, Dr.**
**Wilhelm-Hauff-Strasse 80**
**D-3014 Laatzen 3 (DE)**

(74) Vertreter: **Christiansen, Henning, Dipl.-Ing.**
**Patentanwalt CHRISTIANSEN Pacelliallee 43/45**
**D-1000 Berlin 33 (DE)**

(54) **Fernsprechvermittlungseinrichtung.**

(57) Fernsprechvermittlungseinrichtung, insbesondere für das ISDN-System, welche Programmsteuermittel für eine erste Anzahl von Vermittlungsfunktionen aufweist, wobei eine Schnittstelle zum Anschluß von Signalübertragungsmitteln vorgesehen ist für die Übertragung von Steuerbefehlen für eine zweite Anzahl von Vermittlungsfunktionen und/oder die Aktivierung einer oder mehrerer der ersten Vermittlungsfunktionen, letzteres in Koordination mit den Programmsteuermitteln.

FIG. 2

EP 0 358 597 A2

## Beschreibung

### Fernsprechvermittlungseinrichtung

Die Erfindung betrifft eine Fernsprechvermittlungseinrichtung der im Oberbegriff des Anspruchs 1 angegebenen Art.

Die technische Realisierung größerer, insbesondere ISDN-, Nebenstellenanlagen beruht im allgemeinen auf einer Mehr rechnerkonfiguration aus einer Vielzahl von Peripherierechnern und einem oder - je nach Größe der Anlage - mehreren zentralen Steuerrechnern. Hierbei werden die Peripherierechner zur Abwicklung der hardwarenahen Aufgaben an den Netzzugangskomponenten eingesetzt, wie z.B. ISDN-D-Kanal-Protokollbehandlung der Schicht 1 und 2. Der Steuerrechner übernimmt alle Aufgaben der Vermittlungstechnik, Realisierung von einfachen und komfortablen Leistungsmerkmalen.

Daneben gibt es Aufgaben in ISDN-Nebenstellenanlagen, die zum einen durch die Mehrdienstefähigkeit des ISDN, zum anderen durch den Wunsch nach mehr Komfort bei der Benutzung dieser Dienste entstanden sind, z.B. Protokollumsetzung im Datendienst zum Anschluß von Nicht-ISDN-Geräten, Endgeräte- oder Speicherfunktionen für bestimmte Dienste (Teletex), erweiterte Rufnummerngeber, Nachrichtenübermittlungsdienst (Mailbox), Sprachspeicher (Voicemail) oder Verarbeitung von Daten der Anlage (Gebühren).

Diese Aufgaben erfordern zum Teil sehr hohen Rechenaufwand und müssen außerdem noch an die Erfordernisse der Installation bzw. des Betreibers angepaßt werden. Sie erfordern meist Multiprozessorsysteme.

Eine Anlage dieser Größenordnung ist in der (nicht vorveröffentlichten EP-A1 0 306 693) beschrieben.

Nachteilig ist dabei, daß derartige Anlagen sehr aufwendig konstruiert und deshalb auch kostenaufwendig in der Anschaffung sind.

Weiterhin sind auch Kleinanlagen bekannt geworden, welche als Steckkarte in einen PC einzufügen sind, wobei dann die CPU des PC für sämtliche Vermittlungsaufgaben die notwendigen Datenverarbeitungsprozeduren ausführt.

Der Erfindung liegt die Aufgabe zugrunde, bei eine Fernsprechvermittlungseinrichtung der eingangs genannten Gattung eine Lösung zu schaffen, welche auch für kleine Anlagen geeignet ist und trotzdem nahezu beliebige zusätzliche Leistungsmerkmale unter Gewährleistung der notwendigen Betriebssicherheit der Vermittlungsfunktionen aufweist.

Diese Aufgabe wird mit den kennzeichnenden Merkmalen des Anspruchs 1 gelöst.

Nachteilig ist hierbei die Abhängigkeit der Telefonanlage vom PC-Programmteil, wobei ein Programmfehler mit nachfolgendem "Absturz" des Hauptsystems zum Versagen aller Funktionen führt.

Die Erfindung beruht auf der Erkenntnis, daß mittels Personalcomputern oder entsprechend aufgebauten Datenverarbeitungsvorrichtungen dann ein sicher funktionierende Vermittlungseinrichtung mit Ergänzungsausstattung erzeugbar ist, wenn Maßnahmen getroffen sind, welche eine Fehlsteuerung sicher verhindern. Aufbauend auf Standardsoftware können somit unter verhältnismäßig geringem zusätzlichem Aufwand kundenspezifische Lösungen erstellt werden. Die Betriebssicherheit der notwendigen Grundvermittlungsfunktionen wird dabei dadurch erreicht, daß diese unabhängig von einer eventuellen externen Ergänzung von der Kernanla ge selbst in ihrer Grundkonfiguration ohne externe Ergänzung bewirkt werden können. Damit ist ein Gesprächsbetrieb unter Verzicht auf Komfort auch bei Ausfall des angeschlossenen Rechners möglich.

Die Auslegung der Kernanlage in ihrem begrenzten Funtkionsumfang kann also nach den bisherigen auf Erreichung höchster Zuverlässigkeit basierenden Konstruktionsregeln der Fernmeldetechnik erfolgen. Ergänzungs- und Komfortfunktionen, welche einen hohen Datendurchsatz erfordern, aber nicht funktionsnotwendig sind, werden dagegen mit externer Rechenkapazität über eine Schnittstelle abgewickelt, wobei derartige Geräte als PCs oder ATs aus Großserienfertigung bei verminderten Qualitätsanforderungen relativ preiswert erhältlich sind.

Auf diese Weise können insbesondere auch an kleinen und Kleinst-ISDN-Systeme bis z.B. 8 Ports geschaffen werden, die mehrdienstefähig sind und Server für verschiedene Aufgaben enthalten.

Andere günstige Weiterbildungen beziehen sich insbesondere auf die technischen Maßnahmen zum Anschluß eines PC an die Anlage und die Koordination der Verarbeitung der die Vermittlungsfunktionen betreffenden Daten.

Vorteilhafte Weiterbildungen der Erfindung sind auch in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 zunächst eine Lösung nach dem Stand der Technik als ISDN-Kleinstsystem in PC-Komponenten,

Figur 2 ein Ausführungsbeispiel eines ISDN-Kleinstsystems als Peripheriegerät zu einem PC,

Figur 3 Details des Ausführungsbeipiels gemäß Figur 2

Figur 4 eine Blockdarstellung von Einzelheiten zu Figur 3 sowie

Figur 5 weitere Details einer vorteilhaften Ausführung im Blockschaltbild.

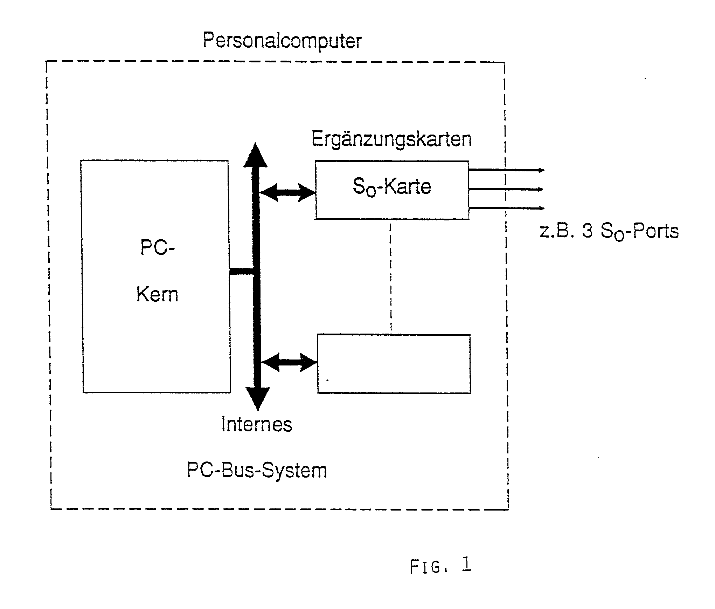

Fig. 1 zeigt den bei Personalcomputern üblichen Aufbau. Es gibt den PC-Kern mit CPU, Speicher, Massenspeicher (Floppy) und Standardperipherie (Tastatur, Bildschirm). Über das interne PC-Bus-System können Ergänzungskarten angeschaltet werden. Im angegebenen Beispiel ist als Ergänzung eine $S_0$-Karte mit drei $S_0$-Ports eingezeichnet, die entweder nur die Port- und Koppelfeldfunktionen enthält oder zusätzlich einen Rechner zur Abwicklung des ISDN-D-Kanal-Protokolls. Im ersten Fall muß der Prozessor des PC alle vermittlungstechnischen Funktionen einschließlich der Schichten 1, 2 und 3 des D-Kanal-Protokolls bearbeiten.

Die Nachteile dieser Konfiguration liegen auf der Hand: Kommunikationsdienste sind nicht verfügbar, wenn der PC ausgeschaltet ist, ISDN-protokoll-Behandlung im Hintergrund der Programmbearbeitung auf dem PC läßt kein zeitgerechtes Abarbeiten der Kommunikationsanforderungen zu, für jeden PC-Typ muß ein spezielle Kleinstsystem in Hard- und Software entwickelt werden, Änderungen von PC-Hard- und Software durch den PC-Lieferanten erfordern gegebenenfalls eine Umentwicklung des Kleinstsystems, es besteht eine Gefahr der Kollision zwischen Standard-Software und Kommunikations-Software.

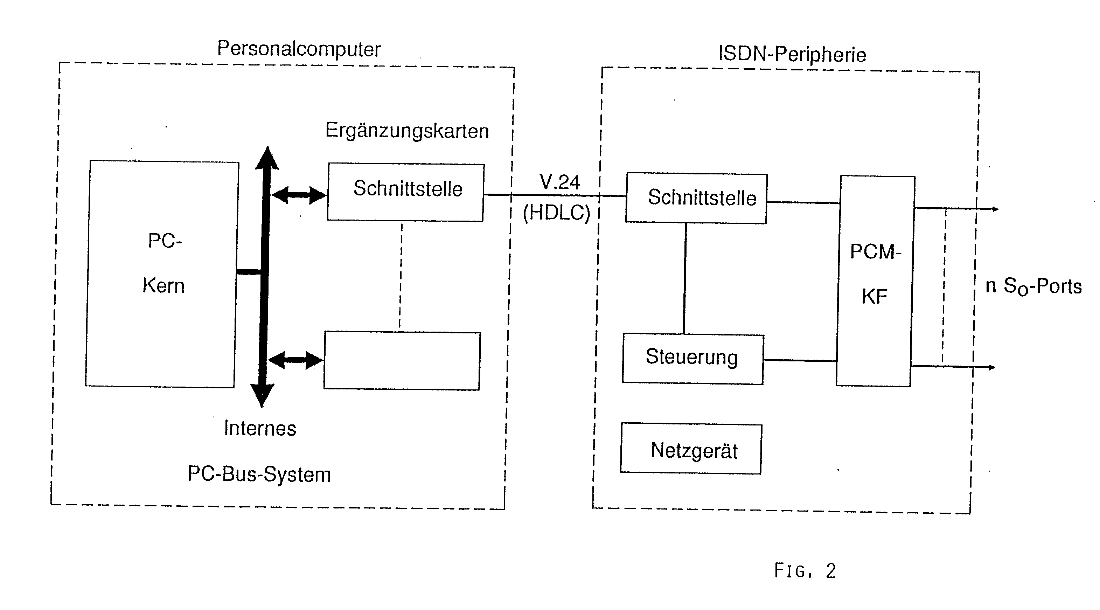

Im Gegensatz zur reinen PC-Lösung enthält das in Figur 2 dargestellte ISDN-Kleinstsystem als Peripheriegerät zum PC fast alle Komponenten eines Vermittlungssystems: So-Ports, PCM-Koppelfeld, Steuerung, Schnittstelle zum Steuerrechner, Peripherierechner (in der Figur als "Steuerung" bezeichnet) und Netzgerät.

Der Peripherierechner übernimmt hier, da nur eine geringe Anzahl von 4 bis 8 So-Ports zu bearbeiten ist, die Aufgaben der einfachen Vermittlungsfunktionen mit. Weiterführende Funktionen und Leistungsmerkmale (z.B. alphanumerisches Telefonbuch, individuelle Kurzhinweise, Gebührenverarbeitung) werden im PC bearbeitet, der über eine Schnittstelle mit der ISDN-Peripherie verbunden ist.

Die Vorteile des Systems liegen insbesondere auch in folgendem: Einfache ISDN-Vermittlungsfunktionen und Standard-Leistungsmerkmale können auch ohne PC abgewickelt werden, Soft- und Hardware der ISDN-Peripherie sind unabhängig vom verwendeten PC-Typ und dessen Betriebssystem, und es kann eine feste Installation der Fernmeldeleitungen stattfinden.

Das Kleinstsystem ist bevorzugt auf maximal 8 ISDN-Ports ausgelegt, wobei die Mischung in Amtszugänge und Endgerä teanschlüsse frei wählbar sind. Entsprechend der Anschlußlage werden Protokolle zum öffentlichen Netz entsprechend 1TR6 und zu den Endgeräten nach DKZN1 verwendet, so daß intern eine Basis zur Steuerung der im PC realisierten Server und Leistungsmerkmale möglich ist.

Die Steuerung bearbeitet für diese Ports ISDN-D-Kanal-Protokolle, einfache Vermittlungsfunktionen und Leistungsmerkmale mit geringer Funktionalität (z.B. einfache Form der Chef/Sekretär-Funktion).

Über die Schnittstelle zum PC werden aufbereitete Schicht-3-Meldungen übertragen, die Leistungsmerkmale mit hoher Funktionalität (z.B. alphanumerisches Telefonbuch, Hotelanwendungen) steuern bzw. Serverfunktionen bedienen. Werden keine B-Kanal-Daten benötigt, ist voraussichtlich eine V.24-Schnittstelle mit mittlerer Geschwindigkeit (19,6 kBd) ausreichend, anderfalls ist eine HDLC-Schnittstelle mit z.B. 2 MByte-Geschwindigkeit zu verwenden.

Die PC-Hardware muß nicht speziell auf das ISDN-Peripheriegerät abgestimmt werden, da zu allen gängigen PCs V.24-Schnittstellen und HDLC-Controller-Baugruppen im Handel sind. Der PC selbst muß bezüglich des Platzes auf dem Arbeits- und Massenspeicher für diese Aufgabe konfiguriert werden. Hierbei wird auf Standardbaugruppen zurückgegriffen. Geeignet sind z.B. IBM AT-kompatible Rechner oder der entsprechende Geräte mit andernen Betriebssystemen.

Für die ISDN-Peripherie muß auf dem PC unter dem dort jeweils laufenden Betriebssystem, z.B. MS-DOS oder Unix, Ap plikationssoftware geschrieben werden, die die entsprechenden Leistungsmerkmale und Server-Funktionen der Anlage darstellt. Hierbei kann insbesondere stark auf Kundenwünsche eingegangen werden. Gegebenenfalls kann für bestimmte Funktionen und Dienste Standardsoftware bereitgestellt werden, die z.B. Gebührenerfassung vorbereitet oder den Teletexdienst abwickelt. Zur Weiterverarbeitung der Daten stehen Standardprogramme wie dBase, Multiplan etc. zur Verfügung.

Günstig ist auch, daß der PC als Gateway zwischen öffentlichem Netz und einem LAN (Local Area Network) zu betrieben werden kann. Die Software muß dann lediglich mit der entsprechenden Hardware Protokoll- und Geschwindigkeitsanpassungen durchführen.

Gegenüber anderen Lösungen für Kleinstsysteme wird bei dem erfindungsgemäßen System die Basis für viele unterschiedliche Anwendungen gelegt. Der Teilnehmer hat die Möglichkeit, sich selbst die entsprechende Applikations-Software zu schreiben oder schreiben zu lassen oder auf Standardsoftware zurückzugreifen. Durch die Trennung von Applications-Software und Kommunikationsnetz-Software ist sichergestellt, daß das System immer netzverträglich arbeitet und zulassungspflichtige Netzfunktionen nicht vom Teilnehmer beeinflußt werden können.

Der Vertrieb des Kleinstsystems kann sich auf die ISDN-Peripherie beschränken, der zugehörige PC kann mit vertrieben oder vom Kunden selbst beigestellt werden. Es ist sogar möglich, die ISDN-Peripherie an PCs anzuschließen, die bereits beim Teilnehmer vorhanden sind. Der Anbieter des Kleinstsystems legt sich darüber hinaus nicht auf ein bestimmtes Fabrikat fest, sondern kann auf PCs mit gleichem Betriebssystem ausweichen.

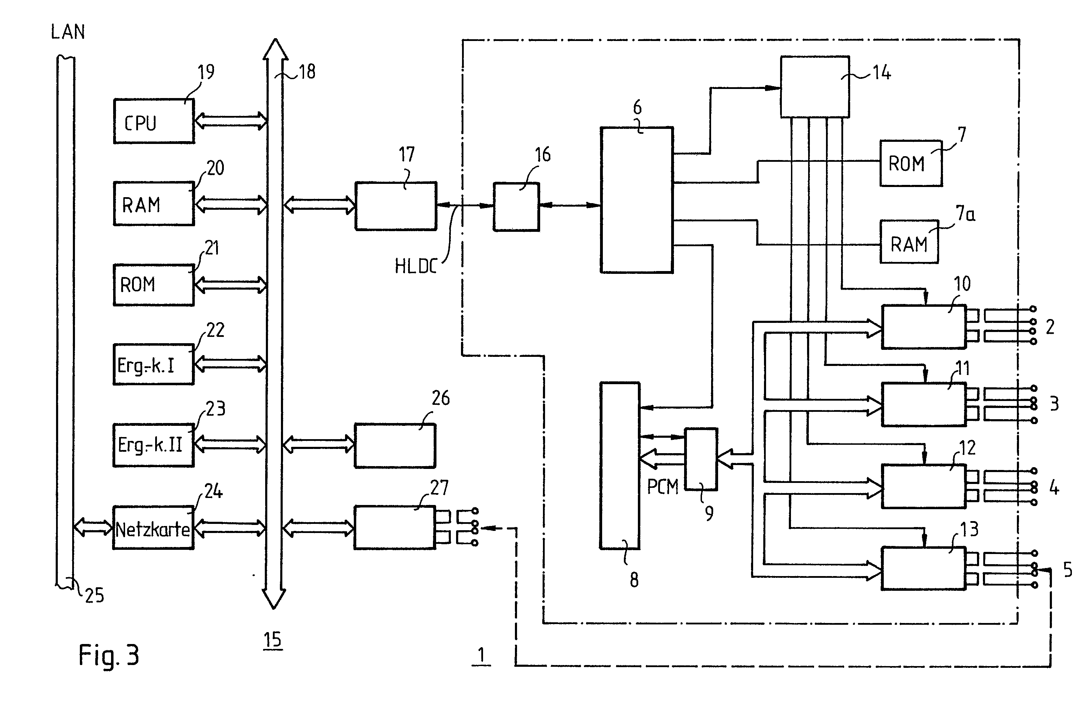

Bei dem in Figur 3 in Einzelheiten dargestellten Ausführungsbeispiel besteht eine Vermittlungseinrichtung 1 für vier Signalleitungen 2 bis 5, auf denen ISDN-Signale übertragen werden, aus einem Mikroprozessor 6, der, gesteuert durch ein in einem ROM 7 enthaltenem Programm eine Vermittlungssteuerschaltung 8 ansteuert, welche ihrerseits in Wechselwirkung zu einer Interface-Schaltung 9 ansteuert, die ihrerseits programmierbare Combo-Schalter als kombinierte Filter und Codec-Schaltungen 10 bis 13 beeinflußt. Diese Schaltungen sind ihrerseits die Interface-Schaltungen zu ISDN-Signalleitungen 2 bis 5. Die Combo-Schaltungen werden ihrerseits vom Mikroprozessor 6 über eine Ansteuerschaltung 14 beeinflußt, welche Steuersignale an die Combo-Schaltungen abgibt, die deren Signalübertragungsverhalten beeinflußt. Die dargestellte Schaltung bildet eine Vermittlungsschaltung für ISDN, bei der die einzelnen Signalleitungen und die darin befindlichen Kanäle wahlweise miteinander in Verbindung treten können. Die Funktionen entsprechen den Grundfunktionen einer Nebenstellenanlage, wobei die durch die Anschlüsse für die Signalleitungen gebildeten Ports wahlweise Amts- oder Nebenstellenorgane bilden können.

Die Grundfunktionen betreffen die Übertragung von internen und externen Wählsignalen, die Erzeugung von Rufsignalen bei den Nebenstellenorganen und die Möglichkeiten der Übernahme von Gesprächen von einem anderen Nebenstellenteilnehmer durch Betätigung einer entsprechenden Taste. Diese Vermittlungen schließen die Vermittlungen zwischen beliebigen Datenendgeräten ein.

Die innerhalb der Vermittlungseinrichtung 1 vorgesehenen Bauelemente befinden sich in einer abgeschlossenen Einheit. Die Baugruppen, welche die Programmierung für komplexere Vermittlungsfunktionen enthalten, befinden sich außerhalb der Einheit. Um zu verhindern, daß diese Baugruppen Steuerprogramme abgeben, welche nicht mit dem Prozessor und dem Programm der Vermittlungseinrichtung 1, kompatibel sind, ist eine Kontrollogik vorgesehen, welche verhindert, daß ungeprüfte Programme in die Steuerung der Vermittlungseinrichtung eingreifen. Diese externen Steuerprogramme sind bei dem dargestellten Ausführungsbeispiel innerhalb einer PC-Einheit 15 vorgesehen und gelangen über eine serielle (HLDC) Schnittstelle sowohl die PC-Einheit 15 als auch die Vermittlungseinheit 1 weisen Steuereinheiten 16 bzw. 17 auf, welche die Schnittstelle bedienen und den wechselseitigen Datenaustausch abwickeln. Die PC-Einheit weist einen Daten-Bus 18 auf, an die eine CPU 19 mit RAM 20 und ROM 21 kommunizieren. Ergänzungskarten 22 und 23 enthalten die Steuerinformationen für die komplexere Steuerung der Vermittlungseinrichtung 1, wobei diese entweder in Form von festen Programmen auf den Ergänzungskarten vorgesehen sind oder aber in Form von variablen Steuerinformationen vom Mikroprozessor zugefügt werden. Auf die Organisation der Ergänzungskarte wird weiter unten näher eingegangen.

Der PC-Bus 18 kann weiterhin mittels einer Netzkarte 24 mit einem LAN 25 in Verbindung treten, so daß eine Steuerung der Vermittlungseinheit 1 auch in einem PC-Netzwerk erfolgen kann.

Der PC kann darüber hinaus noch für weitere Funktionen mittels üblicher Erweiterungskarten ausgestattet werden. Ein Beispiel bildet die Erweiterungskarte 26. Eine weitere Erweiterungskarte wird durch die So-Schnittstellenkarte 27 gebildet, welche eine ISDN-Schnittstelle mit zwei B und D-Kanal bildet und somit einen Anschluß der Vermittlungseinheit 1 (gestrichelte Verbindung) belegen kann. Der PC 15 kann somit gleichzeitig ein Endgerät als Terminaleinheit bilden. Auf diese Weise können über den (entsprechend ausgebauten) PC Telex-, Btx- oder Fax-Funktionen ausgeführt werden, wobei die tatsächlich ausführbaren Funktionen vom Ausbau des Gerätes abhängen. Eine derartige zusätzliche Kommunikationsfunktion des PC ist zwar optional, entspricht aber der Konzeption der Steuerung der Vermittlungseinheit, da diese weitgehend ohne Zuwendung des Bedieners erfolgen kann, wenn die Grund funktionen einmal festgelegt und die zugehörigen Programme übertragen wurden. Wie eine herkömmliche Telefonnebenstellenanlage während des geführten Telefongesprächs keine besondere Zuwendung des Benutzers benötigt, kann im laufenden Betrieb - wenn nicht besondere Funktionen der Vermittlungseinheit geändert werden sollen - im laufenden Betrieb der PC als Kommunikationsendgerät genutzt werden. Hierzu gehört insbesondere auch die Nutzung von Empfangsfunktionen bei Telex, Teletex oder Fax, welche lediglich die Zwischenspeicherung von eingehenden Informationen erfordert, bis der Benutzer diese abruft.

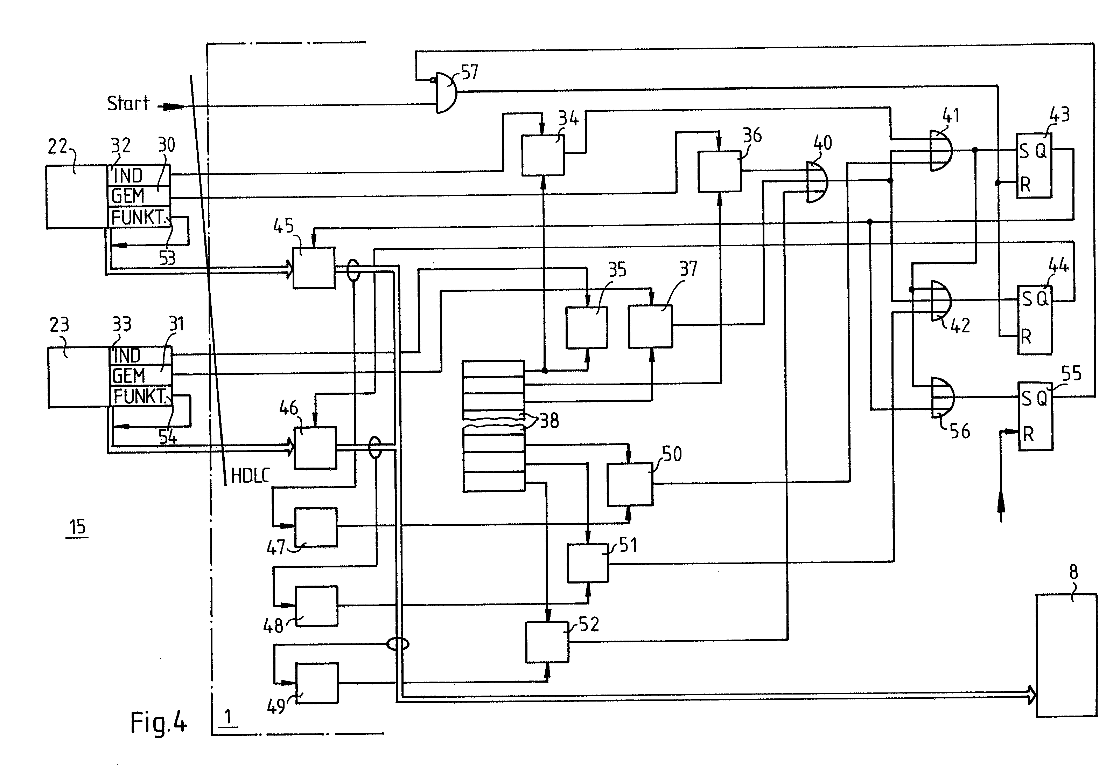

Im linken Bereich der Figur 4 sind lediglich die Ergänzungskarten wiedergegeben und deren für den Informationsaustausch wesentlichen Merkmale. Dabei ist die serielle Schnittstelle HDLC zur erleichterten Übersicht als paralleler Übertragungsweg dargestellt. Die Karten enthalten zur Kennung eine gemeinsame Kennung 30 und 31 sowie eine Individualkennung 32 und 33. Diese Kennungen werden beim Einsetzen der Karte und Inbetriebnahme mittels Komparatoren 34 und 35 bzw. 36 und 37 mit entsprechenden Kennwörtern verglichen, die in einem Speicher 38 innerhalb der Vermittlungseinheit vorhanden sind. Die Übereinstimmung der gemeinschaftlichen Codes der Karten über die Vergleicher 34 und 35 wird bezüglich der Ausgangssignale über ein ODER-Gatter 40 zusammengefaßt, dessen Ausgangssignal über weitere ODER-Gatter 41 und 42 zu Flip-Flops 43 und 44 gelangt, die im gesetzten Zustand über Sperrglieder 45 und 46 die die Funktion der Vermittlungseinrichtung 1 (Vermittlungssteuerschaltung 8) sperren. Weist also eine der Karten einen Code auf, der nicht der gemeinschaftlichen Kennung aller Karten entspricht gehört diese Karte nicht in einen vorgegebenen Satz von Erweiterungskarten, so daß das Zusammenwirken aller Ergänzungskarten insgesamt gestört sein kann. In diesem Fall wird die externe Funktionssteuerung der Vermittlungseinheit durch den PC insgesamt unterbunden.

Bei einer Ausführungsvariante, bei der die Funktionen der Ergänzungskarten nicht interindividuell zusammenhängen, kann bei einer (nicht dargestellten) Version vorgesehen werden, daß ein Nichtübereinstimmen der Gemeinschaftskennung 30 bzw. 31 mit der in dem Speicher 38 vorhandenen entsprechenden Kennung jeweils nur zum Abschalten der individuellen einzelnen Karte führt. In diesem Fall wären die Ausgangsleitungen der Komparatoren 34 und 35 nicht zu dem ODER-Gatter 40, sondern direkt zu den ODER-Gattern 41 und 42 bzw. zu den Setzeingängen der Flip-Flops 43 und 44 zu führen.

Die individuellen Kennungen 32 und 33 werden in dieser Weise behandelt und die Ausgangssignale der Komparatoren 36 und 37, die in dem Falle der Nichtübereinstimmung den "High"-Zustand einnehmen, gelangen zu den ODER-Gattern 41 und 42 und setzen in diesem Fall das jeweilige der Flip-Flops 43 bzw. 44.

Die Flip-Flops 43 und 44 werden jeweils über eine Leitung Start der Flopy-Disk-Einheit 15 zurückgesetzt, wenn diese zur Ruhe in diesen Betriebszustand übergeht. Der daraufhin eingeleitete Vergleich der Kennziffern führt zu dem dargestellten Abschalten, wenn die Nichtübereinstimmung vorliegt.

Zusätzlich wird auch noch eine Funktionskontrolle durchgeführt, die das Betriebsverhalten der jeweiligen Ergänzungskarten und die Plausibilität der abgegebenen Steuersignale überwacht. Zu jeder - oder dem wesentlichen - Ergänzungskarten ist eine Funktionskontrolleinheit 47 bzw. 48 vorgesehen und gegebenenfalls noch eine Überwachungsschaltung 49 für das allgemeine Betriebsverhalten. Hier wird festgestellt, ob die Steuercodes plausibel sind. So wird bei übertragenen Rufnummern die Anzahl der Stellen und gegebenenfalls der Sonderzeichen ermittelt und festge stellt, ob diese internationalen Standards entsprechen. Dasselbe gilt für die Einstellung von Betriebsparametern der Vermittlungseinheit. Dazu ist zu bemerken, daß die vom PC zu übertragenden Informationen redundant sind und die Kontrolleinheit in 47, 48 oder 49 jeweils die möglichen relevanten Informationen aus den redundanten Befehlen herausfiltern und kontrollieren. Eine derartige Redundanz kann z.B. darin bestehen, daß immer eine beschränkte Menge von Signalzustandskombinationen, die über den jeweiligen Übertragungsweg (Steuerkanal) übertragbar sind, als Steuerformationen zulässig sind.

Werden nicht zulässige Steuerbefehle übermittelt, so liegt ein Fehlverhalten vor. Die zulässigen Befehle werden mittels Komparatoren 50, 51 und 52 mit einem jeweils im Speicher 38 vorhandenen zulässigen Befehlssatz verglichen. Wird eine Nichtübereinstimmung festgestellt, so erfolgt über weitere Eingangsleitungen der ODER-Gatter 41 und 42 für die Komparatoren 50 und 51 ein individuelles Setzen der Flip-Flops 43 bzw. 44. Dieses individuelle Setzen von der jeweiligen Steuerkarte zugeordneten Flip-Flops erfolgt, wenn die fehlerhafte Funktion individualisierbar und einer bestimmten Karte zugeordnet werden kann. Liegt ein allgemeiner Übertragungsfehler vor, sind also die zur Übertragung verwendeten Codegruppe selbst oder der Signalaufbau falsch, so wird dieses Fehlverhaltaen in der Überwachungsschaltung 49 festgestellt und ein Komperator 52, der die übertragenen Signalmuster mit ebenfalls im Speicher 38 vorhandenen Signalmustern vergleicht, führt über das ODER-Gatter 40 zum Setzen beider Flip-Flops 43 und 44. Auch in diesem Fall ist der durch das Betriebssystem der Vermittlungseinheit selbst mögliche "Betrieb im Grundzustand" noch möglich.

Es ist ersichtlich, daß durch die Anordnung der Kontrollvorrichtungen in der geschlossenen Vermittlungseinheit keinerlei Kontrollen im PC selbst vorgenommen werden müssen. Auch bei fehlerhaften oder manipulierten Ergänzungskarten ist der Grundbetrieb der Vermittlungseinheit gewährleistet. Es sind auch keine zusätzlichen, die Betriebssicherheit gewährleistenden, Schaltungen zwischen Vermittlungseinheit und PC-Einheit einzufügen. Dadurch, daß nicht nur die individuellen bzw. gemeinschaftlichen Kennungen, sondern auch das Betriebsverhalten der Karten überwacht wird, ist eine Manipulation so gut wie ausgeschlossen, da auch fehlerhaftes Verhalten von möglicherweise manipulierten Karten auch in deren Betrieb beobachtet wird, so daß mögliche Funktionsmängel mit hoher Wahrscheinlichkeit erkannt werden.

Darüber hinaus besteht noch die Möglichkeit, dem ordnungsgemäß installierten Karten bei der Signalübertragung sporadisch auftretende Kontrollcodes einzufügen, welche mit der Kartenfunktion zusammenhängen. Diese Kontrollcodes treten erst mit der Funktion der Karte auf und führen, wenn sie fehlerhaft erzeugt oder übermittelt werden, ebenfalls zum Abschalten. Diese Funktionskontrollcodes sind bei den Karten 22 und 23 als Blöcke 53 und 54 schematisch angegeben. Ihre Ausgangsleitungen führen nicht direkt zu Vergleichern, sondern zu den Übertragungsleitungen für die Steuersignale, in die sie eingebettet werden. Es ist für die Funktion unschädlich, daß diese Signalleitungen durch Schaltblöcke 45 bzw. 46 abgeschaltet werden, wenn eine Fehlfunktion festgestellt wird, da in diesem Fall die Erkennung bereits abgeschlossen ist und die Steuerleitungen vom PC her bis zum Wiedereinschalten (Signalstart) gesperrt sind. Bei einer anderen vorteilhaften, nicht dargestellten Ausführungsform kann das Wiedereinschalten der Flip-Flops so vorgesehen sein, daß das Auslösen des entsprechenden Signals nach einer Fehlschaltung erst nach einem Eingriff in das Gehäuse der Vermittlungseinheit 1 möglich ist. Hierfür ist ein weiteres Flip-Flop 55 vorgesehen, welches über ein ODER-Gatter 56 von den Setzleitungen der Flip-Flops 43 bzw. 44 her gesetzt wird und über einen Q-Ausgang den invertierenden Eingang eines UND-Gatters 57 ansteuert und damit dieses in der Leitung für das Signal "Start" angeordnete UND-Gatter 57 sperrt, sobald das Flip-Flop 55 angesprochen hat. Die Reset-Leitung (Eingang R der Flip-Flops 55) ist - wie dargestellt - nur intern zugänglich.

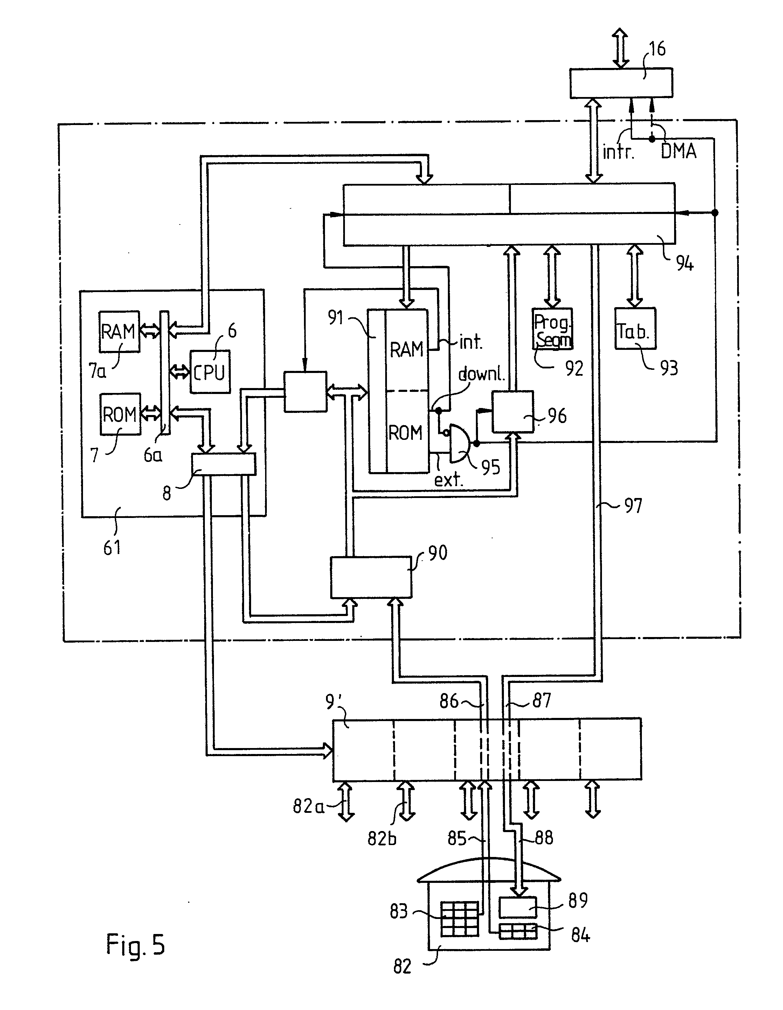

In Figur 5 ist ein Blockschaltbild des Steuerteils 8 als Variante und bevorzugte Ausführung wiedergegeben. Dieses Steuerteil ist dabei für die Vermittlungssteuerung einschließlich der erweiterten Funktionen zuständig und insoweit auch für den Datenaustausch mit dem angeschlossenen PC. Dieses Steuerteil umfaßt in seiner internen Steuerbaugruppe 81 auch die Baugruppen 6, 7 und 7a gemäß Blockschaltbild Figur 3 (Die Ansteuerschaltung 14 gemäß Figur 3 ist lediglich für bestimmte ISDN-Anlagen von Bedeutung und kann in diesem Zusammenhang außer Betracht gelassen werden. Falls erforderlich werden die entsprechenden Steuersignale werden ebenfalls von der Baugruppe 81 erzeugt.)

Bei der Beschreibung der einzelnen Teile der Blockschaltung 5 wird bei der Darstellung der Signalverbindungen zwischen den Baugruppen von der Funktion der darauf zu übertragenen Signale ausgegangen, so daß diese Verbindungen nicht mit den physikalisch vorzusehenden Verbindungen zusammenzufallen brauchen, da auf den betreffenden BUS-Leitungen oder sonstigen Verbindungen, wie in der Datenverarbeitung üblich, die Übertragung meist nach einem Multiplex-Verfahren erfolgt.

Das Steuerteil 8 weist einen Prozessorteil 81 mit einer CPU 6, einem Bus 6a und den zugehörigen ROM- und RAM-Speichern 7 bzw. 7a auf, welche erforderlich sind, um die Grund-Vermittlungsfunktionen auszuführen, die darin bestehen, daß die über das über eine Ansteuereinheit 8 anzusteuernde Koppelfeld 9' angeschlossenen Endgeräte 82a (Endgerät 82 als Beispiel vollständig gezeichnet) mit weiteren Endgeräten oder Amtsleitungen 82b (als Beispiel) verbunden werden. Diese Verbindungen werden auf Anforderung vom jeweiligen Endgerät 82 aus hergestellt, welche über Funktionstasten 83 oder Wähltasten 84 eingegeben werden und über eine Verbindung 85 zum Koppelfeld und von dort über eine Verbindung 86 in den Verarbeitungsteil 81 gelangen. (Die die Wähl- und Funktionstasten betreffenden Funktionen sind dabei im Hinblick auf die internen Übertragungswege zusammengefaßt.)

Die angeforderten Vermittlungsfunktionen werden von der Anlage in ihrer Grundkonfiguration in üblicher Weise ausgeführt, wobei nach Abheben des Hörers an einem der Endgeräte und Wahl einer entsprechenden Kennziffer eine Verbindung der Endgeräte untereinander bzw. von einem Endgerät zu einer Amtsleitung hergestellt wird und solange aufrechterhalten bleibt, bis der Hörer bei dem Endgerät wieder aufgelegt wird. Die gewählte Rufnummer und andere direkt diese (Grund-) Vermittlungs funktionen betreffenden Informationen werden über eine Leitung 87 zum Koppelfeld und von dort über eine Leitung 88 dem Endgerät zugeführt, wo sie in einem Display 89 zur Anzeige gelangen. (Die Leitungen 85 bis 87 sind lediglich für ein Endgerät gezeichnet. Sie symbolisieren die Steuerverbindungen, welche neben den Gesprächsverbindungen über das Koppelfeld 9 erzeugt werden.) Die in Figur 5 im Blockschaltbild dargestellte Vermittlungseinrichtung kann auch durchaus in konventioneller (Nicht-ISDN-) Technik aufgebaut sein, da die erfindungsgemäße Lösung unabhängig von der für die zu übertragenden Informationen angewendeten Technik ist. Der Prozessorteil 61 mit der Ansteuereinheit 8 und dem hier elektromechanische Schalter enthaltenden Koppelfeld 9' entsprechen in ihrem Aufbau dem einer vollständigen Klein-Nebenstellenanlage.

Auf einen vom Endgerät 82 her an das Steuerteil 8 herangetragener Vermittlungswunsch bzw. den Aufruf einer Funktion bzw. einen Vermittlungswunsch in einem erweiterten Funktionsbereich (zweite, erweiterte Leistungsmerkmale), wie er durch Betätigung der Wähl- bzw. Funktionstasten des Endgerätes einzeln oder in Kombination übermittelt wird, wird aufgrund der übermittelten Signale über eine Verknüpfungsschaltung 90 ein Signal zur Adressierung eines Tabellenspeichers 91 abgegeben, der in ROM- oder RAM-Speicherbereichen Informationen darüber enthält, ob eine gewünsch te (erweiterte) Vermittlungs- oder Hilfsfunktion ohne weiteres ausführbar ist (vorhanden) oder ob die Ausführung unter Zuhilfenahme des über die externe Schnittstelle angeschlossenen PC bewerkstelligt werden kann. Die in dem Tabellenspeicher bei den durch eine Kennung für die auszuführende Funktion jeweils adressierte Speicherplatz enthält eine Information, ob die betreffende Funktion als Leistungsmerkmal innerhalb des eigenen Speicherbereichs (ROM-Speicher 7) bereits vorhanden ist und zu den Grundfunktionen gehört (Ausgangsignal erscheint auf der Leitung "int" (=intern vorhandenes Signal) oder ob dieses Signal eine Funktion betrifft, die in einem weiteren Speicherbereich als Download Programm-Modul (Speicher 92) enthalten ist bzw. mittels einer Download Tabelle abgearbeitet werden kann, die in einen Speicher 93 eingelesen wurde.

Bei diesen erweiterten Funktionen handelt es sich also um solche, bei denen die zur Ausführung notwendigen Programme bzw. Datentabellen bereits zuvor in die dafür vorgesehenen Speicherbereiche 92 bzw. 93 übertragen wurden. Diese Übertragung wird meist vorher vom PC her gesteuert erfolgen, es kann sich aber bei der Funktion "Einlesen von Download-Programmen bzw. Datensätzen in Form von Tabellen" aber auch um ein Leistungsmerkmal handeln, welches von einem Endgerät her aktiviert wird.

Mit dem Übertragen der Daten für die Download-Funktionen werden gleichzeitig in den RAM-Bereich des Speichers 92 die notwendigen Informationen abgelegt, um sicherzustellen, daß bei Auswahl der betreffenden Funktionen über die Endgeräte, mittels des Ausgangssignals "Downl" (=Download) auf die betreffenden Speicherbereiche verwiesen wird. Während vorher also in dem jeweils adressierten Speicher das gewünschte zugehörige Leistungsmerkmal als "nicht ausführbar" gekennzeichnet wurde, wird jetzt in dem betreffenden RAM-Speicherbereich des Speichers 92 durch ein den Ausgang "Downl." aktivierendes Signal ersetzt. (Die auf die intern vorhandenen Leistungsmerkmale verweisenden Signale brauchen dagegen nicht verändert zu werden und sind daher im entsprechenden ROM-Bereich abgelegt.)

Für den Datenverkehr zwischen der äußeren Schnittstelle 16 einerseits und der Kernanlage gemäß Block 61 andererseits dient ein Interface 94, über das der Zugriff in die Speicherbereiche 92 und 93 sowohl extern vom PC über das Schnittstellen-Interface 16 als auch vom Bus 6a durch die CPU 6 der Kernanlage (Block 61) zugänglich ist. Das Interface wird dem Block 61 zugeordnet, wenn am Ausgang "downl." des Speichers 91 ein Signal erscheint, welches darauf hinweist, daß für ein Leistungsmerkmal Daten in den Speichern 92 oder 93 enthalten sind.

Wenn die zur Ausführung von Leistungsmerkmalen notwendigen Programm- und Tabelleninformationen weder in den internen Speicherbereichen des Blocks 61 (entsprechend der Grundkonfiguration) noch in den Speichern als Download-Information vorhandensind, wird bei Aufruf der entsprechenden Funktion aus dem ROM-Bereich des Speichers 91 ein Signal ausgelesen, welches die Leitung "ext." (= extern) aktiviert. Dieses Signal ist über ein UND-Gatter 94 mit dem Signal "Downl." verknüpft, das an seinen invertierenden Eingang gelangt. Damit wird die Aktivierung des ange schlossenen PC unterbunden, wenn die betreffenden Daten oder das betreffende Programm-Modul bereits in die Speicher 92 bzw. 93 eingelesen wurde. Die Auswahl erfolgt über den ROM-Bereich des Speichers 91, da die innerhalb des Blocks 61 zunächst nicht zur Verfügung stehenden Leistungsmerkmale festliegen.

Mit dem Ausgangssignal "ext.", d.h., wenn ein betreffendes Leistungsmerkmal nicht vorhanden ist, wird das aus dem Tabellenspeicher 91 ausgelesene Ausgangssignal als eine entsprechende Anforderungsinformation über das Interface, welches über seinen entsprechenden Eingang (rechte Seite) als zum PC hin durchlässig geschaltet wird, und die Schnittstelle 16 zum PC hin übertragen, woraufhin vom PC her die betreffenden Signale in die Speicher 92 oder 93 übertragen werden.

Die Anforderung vom PC erfolgt über eine dort vorhandene speicherresident geladenen Software über ein Interrupt-oder DMA-Zugriffssignal, welches von der Nebenstellenanlage über die Schnittstelle abgegeben wird, Das DMA-oder Interruptsignal wird vom Signal "ext." als Ausgangssignal des Tabellenspreicher 91 abgeleitet und erscheint, wenn die Übertragung von Datensätzen aus dem angeschlossenen PC erforderlich ist, da das gewünschte Leistungsmerkmal von der Anlage in ihrer Grundkonfiguration nicht (vollständig) unterstützt wird.

Nach erfolgter Übertragung wird die Information im Speicher 92 als intern vorhanden gekennzeichnet (Signal "Downl."), so daß von der Anlage in ihrer Grundkonfigura tion darauf zugegriffen werden kann. Die Gestaltung der Speicher 92 und 93 kann den jeweiligen Anforderungen angepaßt werden, so daß gegebenenfalls auch direkt im Handshake-Betrieb ein Datenaustausch zwischen der Einheit gemäß Block 61 und dem externen PC stattfinden kann - im Grenzfall können die Informationen auch Byteweise, also quasi direkt übertragen werden. (Die Durchschaltung des Übertragungswegs zwischen den Speichern 92 und 93 und der Einheit 61 erfolgt dabei jeweils durch das Signal "Downl").

Auf diese Weise bestehen die verschiedensten Möglichkeiten der Kooperation zwischen externem PC und der erfindungsgemäßen Nebenstellenanlage. Über eine Schaltstufe 96 lassen sich auch im Falle der Unterstützung von Leistungsmerkmalen durch den angeschlossenen PC auch über die Tasten 83 bzw. 84 eingegebenen Steuerbefehle über das Interface an den externen PC übermitteln. Anzeigen im Display 89 des Endgeräts werden ebenfalls vom esternen PC her übertragen. Hierzu dient die Verbindung 97. Bei dem dargestellten Ausführungsbeispiel liegt dabei die Annahme zugrunde, daß dem Benutzer des Endgeräts zuzuordnende Mitteilungen stets ein Leistungsmerkmal bildet, welches nicht zu einer Minimalausstattung gehört, welche zur Aufrechterhaltung der Grundvermittlungsfunktionen notwendig ist. Dabei können bei anderen Ausführungen selbstverständlich zusätzlich derartige Anzeigen auch intern hervorgerufen werden, wie beispielsweise die Anzeige der gewählten Rufnummer, die im Endgerät 82 selbst vorliegt und nicht extern übertragen zu werden braucht.

Weiterhin besteht noch eine Verbindung zwischen dem Bus 6a der Kernanlage 61 und einem weiteren Eingang des ODER-Stufe 90. Hierdurch ist es möglich, auch in Abhängigkeit der Bearbeitung von in der Anlage vorhandenen Leistungsmerkmalen weitere nachgeordnete Funktionen von dem externen PC unterstützt zu erhalten. Diese Aufrufe wirken also entsprechend den vom Benutzer direkt abgerufenen Leistungsmerkmalen. Auf diese Weise lassen sich die Grundfunktionen - je nach vorgesehener Unterstützung durch den externen PC - in verschiedenen Ausbaustufen "kaskadieren". Insbesondere Diagnosefunktionen lassen sich vom PC während des Betriebs der Anlage günstig ausführen, so daß insoweit der PC ein unabhängiges System bildet, welches selbst bei Fehlfunktionen der Anlage im Bereich ihrer Ausbaustufe gemäß Block 61 deren Funktionen kontrollieren oder korrigieren kann. Der PC wird durch die zusätzliche Hard- oder Software kaum belastet, da in der Regel in Festplatten und dergleichen ein ausreichender preiswerter Speicherbereich zur Verfügung steht, der aber selbst nicht ausfallsicher zu sein braucht. Diejenigen Betriebsfälle, bei denen auch der PC versagt, sind vernachlässigbar, so daß insoweit eine zusätzliche Erhöhung der Zuverlässigkeit der Grundanlage bei PC-Untertützung beispielsweise über Kontrollfunktionen möglich ist.

Im Regelfall dient die Unterstützung vom PC her aber der Erweiterung der Leistungsmerkmale der Anlage in Richtung Dateiverwaltung und Anschluß an elektronische Informationsmedien sowie Bürosysteme und -programme.

Die von der Anlage zum PC hin übertragenen Anforderungssignale werden vom PC als welches den PC veranlaßt, die notwendigen Daten durch entsprechende Aufbereitung im Programm erst zusammenzustellen und in der notwendigen Zusammenstellung oder bearbeiteten Fassung zu übertragen. Das entsprechende Steuersignal an den PC ist dabei entweder ein Interrupt-Signal, welches bei dem PC den bisherigen Arbeitsablauf unterbricht und die Bereitstellung der gewünschten Daten vorrangig auslöst oder aber die Veranlassung eines direkten Speicherzugriffs (DMA), der unter Unterbrechung der bisherigen Verarbeitungstätigkeit des Prozessors in dem PC dessen Speicher oder einen Teil dessen Speicherbereichs direkt für einen externen Datenzugriffs freigibt. Die hierfür erforderlichen Hilfsschaltungen innerhalb des PC sind auf der separaten Steuerkarte 17 (Fig. 3) vorgesehen, welche eine Hardware-Erweiterung für den PC bildet und die Schnittstellenfunktionen verwaltet. Wenn auf dieser Karte ein eigener Prozessor vorgesehen ist, der den DMA-Zugriff kurzfristig ausführt und die dabei ausgelesenen Daten unabhängig von der CPU des Prozessors weiter verarbeitet, wird der PC durch diesen Zugriff kaum belastet und kann weitere Programm-Tasks unabhängig ausführen. Im Falle von Multitasking-fähigen Prozessoren werden die zur Steuerung der Vermittlungsanlage als periphere Einheit notwendigen Programmteile als selbständige "Tasks" geführt, wobei diese durch einen entsprechenden Interrupt aufgerufen wird. Hierbei ist vorteilhaft, daß die weiteren vom PC zu bearbeitenden Programme (Tasks) unbehelligt bleiben und auch keine speicherresidenten Programmteile geladen werden müssen, welche mit anderen kompliziert zu verarbeitenden Programmteilen in Konflikt kommen können.

Die vom PC her übermittelten Daten werden über die die steuerbare Schnittstelle 94 als ausführbare Programm-Module in den Speicher 92 oder als Tabellen in den Speicher 93 überführt. Die ausführbaren Programme betreffen dabei erweiterte Vermittlungsfunktionen (erweiterte Leistungsmerkmale), wobei die Daten im Tabellenspeicher zugehörige Datensätze mit Tabelleninformationen betreffen, wie beispielsweise Informationen über den Netzaufbau, Rufnummerninformationen oder Teilnehmerinformationen (Auszüge von Daten über Teilnehmernetze, Telefonbuch). Auf einen entsprechenden Befehl (Verbindung 91) werden die entsprechenden Daten auch zum Endgerät 92 durchgeschaltet, um dort im Display 89 wiedergegeben zu werden.

Die Verbindung, die zu dem Schalter 96 führt, bewirkt bei Aktivierung, daß die über Funktions- bzw. Wähltasten des Endgerätes 82 abgegebenen Signale auch in einem Zwischenspeicher abgelegt werden, von dem aus sie vom Prozessor zur Abarbeitung weiterer Programme benutzt werden, oder aber über die Schnittstelle 16 zum Prozessor weitergegeben werden. Auf diese Weise können die Programme interaktiv vom Endgerät 82 her gesteuert werden, wobei auch in das Display 90 übertragene Funktionen hin über Funktions- oder Wähltasten Auswahlen und Zuordnungen getroffen werden, welche die Übertragung weiterer Informationen veranlassen. Diese Informationen können beispielsweise die Namen eines Rufnummernregisters oder eines alphanumerischen im PC vorhandenen oder über den PC im Zugriff befindlichen elektronischen Telefonbuchs sein, wobei durch die Auswahl am Endgerät ein betreffender Teilnehmer ausgesucht und die betreffende Rufnummernausgabe veranlaßt werden kann. Ent sprechend lassen sich alle Arten von Dateien bearbeiten, welche fernsprechrelevante Informationen beinhalten, wie Personendatenverzeichnisse mit Rufnummern, entstandene Telefongebühren etc. Durch entsprechende speicherresidente Programme oder aber im Multi-Taskingbetrieb lassen sich im PC mit den dort vorhandenen Programmen Verknüpfungen bilden, welche die Nebenstellenanlage in diese Programme "einbinden". So lassen sich mittels Dateiprogrammen Folgen von Anrufen in Abhängigkeit von weiteren im PC vorhandenen Daten ("Telefonmarketing") "vorprogrammieren" und zusammen mit dem Benutzer über das Display im Endgerät anzuzeigenden Informationen ("Kundenstichwort") nacheinander halb- oder vollautomatisch abwickeln. In anderen Fällen kann die Gesprächsgebührenerfassung und -zuordnung automatisiert werden.

Die Unterstützung durch den externen PC erfolgt dabei entweder als externe Speichererweiterung (Übersendung von Programm-Modulen in Speicher 92) bzw. Übergabe von Daten von der Anlage in den PC bei dort fehlendem ensprechendem Leistungsmerkmal oder aber durch Ergänzung der Datenverarbeitungskapazität durch Nachverarbeitung der übergebenen Daten und Ruckubergabe der aufbereiteten Tabellen bzw. der Übergabe von Tabellen aus eigenen Datenbeständen des PC (gegebenenfalls nach entsprechender Aufbereitung).

Die dargestellte Anlage läßt sich in denjenigen Fällen, in denen der angeschlossene PC nicht über Multitasking-Fähigkeiten verfügt oder aber speicherresidente Programme möglicherweise zu Konflikten mit im PC vorhandener Software führen, als über einen im PC installierten Gerätetreiber steuern. Die Schnittstelle zum PC wird dabei als zeichen-oder blockorientiertes Gerät definiert, an das Daten übertragen werden. Wird die Anlage dabei beispielsweise als Speichergerät definiert, so können von herkömmlichen Programmen Datensätze in entsprechenden Formaten an die Anlage übertragen werden. Dies geschieht im Rahmen der üblichen Standardsoftware beispielsweise als ASCII- oder als dBase-kompatible Datei, so daß in der Standard-Software keine Änderungen erforderlich sind. Eine gegebenenfalls notwendige Umformatierung wird durch den Gerätetreiber - für den Benutzer, der lediglich ein Speichermedium zu bedienen glaubt - unbemerkt vorgenommen. Die von dem Gerätetreiber gegebenenfalls vorzunehmenden Interrupts oder DMA-Zugriffe erfolgen innerhalb der Hierarchie des PC und ohne Konflikt mit anderen Treibern oder Programmen. Für die Nutzer unterschiedlicher Standard-Software werden dann lediglich verschiedene Gerätetreiber mit den jeweiligen integrierten Form-Umsetzern vorgesehen, so daß Listen von Rufnummern, Gebühren etc. in Tabellenform problemlos in beiden Richtungen übertragbar sind. Dem Nutzer des Endgeräts stehen damit viele Funktionen des PC als Fernsprechgeräte-Ergänzung zur Verfügung, ohne daß er selbst den PC zur Verfügung haben müßte. Außerdem entfällt das lästige Umspeichern von Datensätzen aus dem PC mit manueller Neueingabe in die Telefonanlage, wie es sonst bei Rufnummernänderungen etc. lästigerweise erforderlich ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Fernsprechvermittlungseinrichtung, insbesondere als ISDN-System, für eine Anzahl angeschlossener Endgeräte, mit einem Prozessor und einem Programmspeicher zur Aufnahme von Programmen für eine erste Anzahl von Vermittlungsfunktionen, die jeweils auf ein entsprechendes von einem angeschlossenen Endgeräte aufgenommenes Anreizsignal hin ein Koppelfeld steuern und für sich mindestens ausreichend sind, um Fernsprechverbindungen zwischen den Endgeräten untereinander bzw. mit mindestens einer Amtsleitung aufzubauen, **gekennzeichnet durch** eine Schnittstelle für die Übernahme von Steueranweisungen als vollständige Programmsegmente bzw. -module und/oder Dateien als Ergebnisse von extern ausgeführten Programmsegmenten oder Suchroutinen für die Steuerung einer zweiten Anzahl von Vermittlungsfunktionen als erweiternde Leistungsmerkmale zur Weiterverarbeitung durch die Programmsteuermittel bzw. zur Ausgabe an Displays der Endgeräte sowie die Ausbildung der Schnittstelle zum Anschluß der Vermittlungseinrichtung als Peripherieteil an einen PC oder einen ähnlichen Computer mit einem Standardbetriebssystem und Erweiterungsslots zur Einfügung von zusätzlichen Ergänzungsteilen mit Zugriff auf den Systembus und deren Nutzung zur Steuerung peripherer Geräte.

2. Fernsprechvermittlungsvorrichtung nach Anspruch 1, **dadurch gekennzeichnet,** daß ein Datenspeicherbereich (92, 93), insbesondere als Zwischenspeicher, sowohl von der Schnittstelle als auch für die Verarbeitung durch den Prozessor (6) zugänglich ist.

3. Fernsprechvermittlungsvorrichtung nach einem der vorangehenden Ansprüche, **dadurch gekennzeichnet,** daß der Zugriff auf diesen Datenspeicherbereich durch den Prozessor freigegeben ist, wenn durch ein angeschlossenes Endgerät oder im Zuge der Verarbeitung von Vermittlungsfunktionen betreffenden Programmen durch den Prozessor selbst eine ein erweiterndes Leistungsmerkmal bildende (weitere) Vermittlungsfunktion aufgerufen ist.

4. Fernsprechvermittlungsvorrichtung nach Anspruch 3, **gekennzeichnet durch** einen Speicher, welcher in einer Zuordungstabelle für jede aufzurufende Vermittlungsfunktion eine Kennzeichnung enthält, welche angibt, ob die für die Verarbeitung für eine Vermittlungsfunktion durch den Prozessor notwendigen Datensätze und/oder Programmsegmente in einem dem Prozessor allein zugeordneten Speicherbereich und/oder in dem Zwischenspeicher, der sowohl für den Prozessor als auch von der Schnittstelle her zugänglich ist, vorhanden sind.

5. Fernsprechvermittlungsvorrichtung nach Anspruch 4, **dadurch gekennzeichnet,** daß, falls die für die Verarbeitung für eine(r weiteren) Vermittlungsfunktion durch den Prozessor notwendigen Datensätze und/oder Programmsegmente nicht ein einem dem Prozessor zugeordneten Speicherbereich und/oder in dem Zwischenspeicher, der sowohl für den Prozessor als auch von der Schnittstelle her zugänglich ist, eine Datenanforderung an die Schnittstelle übermittelt wird.

6. Fernsprechvermittlungsvorrichtung nach Anspruch 5, **dadurch gekennzeichnet,** daß die Datenanforderung in einer Anforderung nach direktem Speicherzugriff (DMA) und/oder einer Interruptanforderung besteht.

7. Fernsprechvermittlungsvorrichtung nach Anspruch 6, **dadurch gekennzeichnet,** daß mit der Datenanforderung eine die Art der Vermittlungsfunktion betreffende Information oder sonstige die Vermittlungsfunktion betreffende Daten übermittelt werden.

8. Fernsprechvermittlungsvorrichtung nach Anspruch 7, **dadurch gekennzeichnet,** daß die Informationen oder Daten mindestens mittelbar von den Wähl- und/oder Funktionstasten der Endgeräte erzeugt werden.

9. Fernsprechvermittlungsvorrichtung nach einem der Ansprüche 5 bis 8, **dadurch gekennzeich net,** daß nach Übermittlung einer Datenanforderung an die Schittstelle Daten oder Informationen von der Schnittstelle her in ein bei einem Endgerät vorgesehenes Display übertragen werden.

10. Fernsprechvermittlungseinrichtung nach einem der vorangehenden Ansprüche, **dadurch gekennzeichnet,** daß die Vermittlungseinrichtung mit einem abgeschlossenen Gehäuse versehen ist, welches einen Schnittstellenanschluß aufweist.

11. Fernsprechvermittlungseinrichtung nach einem der vorangehenden Ansprüche, **dadurch gekennzeichnet,** daß die Schnittstelle als serielle Schnittstelle ausgebildet ist.

12. Fernsprechvermittlungseinrichtung nach einem der vorangehenden Ansprüche, **dadurch gekennzeichnet,** daß die Schnittstelle als HLDC-Schnittstelle ausgebildet ist.

13. Fernsprechvermittlungseinrichtung nach einem der vorangehenden Ansprüche, **dadurch gekennzeichnet,** daß innerhalb der Vermittlungsschaltung mindestens eine Kontrollschaltung zur Überprüfung der Kennung von mindestens einer zusätzlich in den PC einfügbaren Ergänzungskarte, welche über die Schnittstelle Funktionen der Vermittlungseinrichtung steuert, über diese Schnittstelle vorgesehen ist.

14. Fernsprechvermittlungseinrichtung nach Anspruch 13, **dadurch gekennzeichnet,** daß die Kontrollschaltung aus einer Komparatorschaltung zur Feststellung der Übereinstimmung eines mit der einfügbaren Ergänzungskarte verbundenen und über die Schnittstelle übertragbaren Individualisierungscodes handelt.

15. Fernsprechvermittlungseinrichtung nach einem der vorangehenden Ansprüche, **dadurch gekennzeichnet,** daß der Code oder ein Teil des Codes allen für die Vermittlungseinrichtung geeigneten Ergänzungskarten gemeinsam ist.

16. Fernsprechvermittlungseinrichtung nach Anspruch 13, **dadurch gekennzeichnet,** daß die Kennung der Ergänzungskarte aus während des Betriebs abgegebenen über die Schnittstelle übermittelten Steuersignalen oder in diesen enthaltenen Signalen besteht.

Personalcomputer

Ergänzungskarten

$S_O$-Karte

z.B. 3 $S_O$-Ports

PC-Kern

Internes

PC-Bus-System

FIG. 1

Personalcomputer

Ergänzungskarten

PC-
Kern

Schnittstelle

V.24
(HDLC)

Internes

PC-Bus-System

ISDN-Peripherie

Schnittstelle

Steuerung

Netzgerät

PCM-
KF

n $S_0$-Ports

EP 0 358 597 A2

FIG. 2

LAN

CPU 19

RAM 20

ROM 21

Erg.-k.I 22

Erg.-k.II 23

Netzkarte 24

25

18

17

HLDC

16

6

14

ROM 7

RAM 7a

26

27

PCM

9

8

10

11

12

13

2

3

4

5

15

Fig. 3

1

EP 0 358 597 A2

Fig.4

EP 0 358 597 A2

Fig. 5